(19) Europäisches Patentamt / European Patent Office / Office européen des brevets

(11) **EP 4 738 767 A1**

(12) **EUROPEAN PATENT APPLICATION**
published in accordance with Art. 153(4) EPC

(43) Date of publication:
06.05.2026 Bulletin 2026/19

(21) Application number: 24941318.8

(22) Date of filing: 21.08.2024

(51) International Patent Classification (IPC):
*H04L 9/40* (2022.01)

(52) Cooperative Patent Classification (CPC):
H04L 9/40

(86) International application number:
PCT/CN2024/113615

(87) International publication number:
WO 2025/246040 (04.12.2025 Gazette 2025/49)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.05.2024 CN 202410670630

(71) Applicants:
• State Grid Smart Grid Research Institute Co., Ltd.
  Beijing 102209 (CN)
• The 32nd Research Institute of China Electronics Technology Group Corporation
  Shanghai 201808 (CN)
• Hangzhou UWNTEK Automation System Co., Ltd.
  Hangzhou, Zhejiang 311107 (CN)
• State Grid Henan Electric Power Company
  Zhengzhou, Henan 450000 (CN)

(72) Inventors:
• WANG, Yunfan
  Beijing 102209 (CN)

• ZHANG, Tao
  Beijing 102209 (CN)
• MA, Yuanyuan
  Beijing 102209 (CN)
• ZHANG, Bo
  Beijing 102209 (CN)
• XI, Zesheng
  Beijing 102209 (CN)
• HE, Chuan
  Beijing 102209 (CN)
• CHEN, Lu
  Beijing 102209 (CN)
• LIU, Bo
  Beijing 102209 (CN)
• YU, Xinsheng
  Shanghai 201808 (CN)
• ZHANG, Yinan
  Hangzhou, Zhejiang 311107 (CN)
• HAO, Fuzhong
  Zhengzhou, Henan 450000 (CN)
• LYU, Zhuo
  Zhengzhou, Henan 450000 (CN)

(74) Representative: Murgitroyd & Company
165-169 Scotland Street
Glasgow G5 8PL (GB)

(54) **EXECUTOR SCHEDULING OPTIMIZATION METHOD AND DEVICE FOR MIMIC DEFENSE FRAMEWORK**

(57) The present application relates to the technical field of network security, and discloses an executor scheduling optimization method and device for a mimic defense framework. The method comprises: using a plurality of executors corresponding to a source program to be tested, so as to form a plurality of executor sets; calculating the heterogeneity of each executor set and a security defense coefficient of each executor set; using the heterogeneity of each executor set and the security defense coefficient of each executor set to calculate a scheduling function score of each executor set, and determining final scheduled objects on the basis of the scheduling function score of each executor set; and according to a decision result of each executor among the final scheduled objects in a mimic defense framework, updating the number of executors scheduled from among the final scheduled objects during each scheduling. In the technical solution provided by the present application, scheduling efficiency is optimized while guaranteeing the maximization of difference between executors, and the security and performance of a system are improved.

EP 4 738 767 A1

Use a plurality of executors corresponding to a source program to be tested, so as to form a plurality of executors sets — 101

Calculate the heterogeneity of each executor set and a security defense coefficient of each executor set — 102

Use the heterogeneity of each executor set and the security defense coefficient of each executor set to calculate a scheduling function score of each executor set, and determine final scheduled objects on the basis of the scheduling function score of each executor set — 103

According to a decision result of each executor among the final scheduled objects in a mimic defense framework, update the number of executors scheduled from among the final scheduled objects during each scheduling — 104

FIG. 2

**Description**

CROSS REFERENCE TO RELATED APPLICATION(S)

The present disclosure is based on and claims priority to Chinese Patent Application No. 202410670630.3, filed on May 28, 2024, entitled "an execution entity scheduling optimization method and apparatus for a mimicry defense framework", the entire contents of which are incorporated herein by reference in its entirety.

TECHNICAL FIELD

The present disclosure relates to, but is not limited to, the field of network security technologies, and in particular, to an execution entity scheduling optimization method and apparatus for a mimicry defense framework.

BACKGROUND

The mimicry defense framework is an innovative security defense concept proposed based on the biological mimicry phenomenon, aiming to fundamentally break free from the current strategic dilemma of "easy to attack but difficult to defend" in cyberspace. A core idea of the mimicry defense framework is to enable the system itself to have inherent security capabilities through a mimicry architecture with "dynamic, heterogeneous, redundant, and adjudication" mechanisms. The "dynamic" aspect refers to the system scheduling different "heterogeneous and redundant" execution units or service components according to preset rules or dynamic algorithms to ensure that the system can operate in different states, thereby confusing attackers, blocking attacks, and ensuring system security.

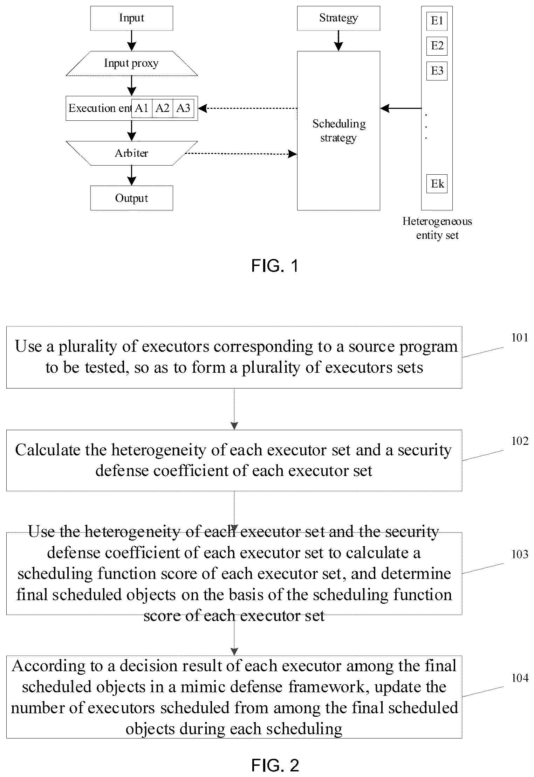

FIG. 1 shows a basic framework of mimicry defense. When the arbiter detects an anomaly and sends a scheduling instruction to a scheduling strategy module, the scheduling strategy module will send a new execution entity based on the provided scheduling algorithm. Existing scheduling algorithms, such as round-robin scheduling algorithm and random scheduling algorithm, only implement the basic functions of the mimicry framework. They cannot dynamically analyze and judge the heterogeneity degree constructed by the execution entity, and cannot avoid the generation of common mode vulnerabilities. Therefore, they cannot effectively defend against intrusion.

SUMMARY

To overcome the problems existing in the above-mentioned related art, the present disclosure provides an execution entity scheduling optimization method and apparatus for a mimicry defense framework.

According to a first aspect of the embodiments of the present disclosure, an execution entity scheduling optimization method for a mimicry defense framework is provided, and the method includes:

constructing a plurality of execution entity sets using a plurality of execution entities corresponding to a source program under test;

calculating a heterogeneity degree of each execution set and a security defense coefficient of each execution set;

calculating a scheduling function score of each execution entity set, and determining a final scheduling object according to the scheduling function score of each execution entity set using the heterogeneity degree of each execution set and the security defense coefficient of each execution set; and

updating a number of execution entities scheduled from the final scheduling object for each scheduling cycle according to a decision result of each execution entity in the final scheduling object within the mimicry defense framework.

In an implementation, the constructing the plurality of execution entity sets using the plurality of execution entities corresponding to the source program under test, includes:

constructing an execution entity pool using the plurality of execution entities corresponding to the source program under test; and

constructing the plurality of execution entity sets by selecting a plurality of groups of a preset number of execution entities from the execution entity pool.

In an implementation, the calculating the heterogeneity degree of each execution set, includes:

obtaining a heterogeneity degree among each execution entity in each execution entity set by using a code similarity measurement method; and

calculating the heterogeneity degree of each execution entity set by using the heterogeneity degree among each execution entity in each execution entity set.

In an implementation, the calculating the security defense coefficient of each execution set, includes:

determining a security defense coefficient of each execution entity in each execution entity set according to an output status of each execution entity in each execution entity set; and
calculating and obtaining the security defense coefficient of each execution entity set by using the security defense coefficient of each execution entity in each execution entity set.

In an implementation, the determining the final scheduling object according to the scheduling function score of each execution entity set, includes:
selecting an execution entity set corresponding to a smallest scheduling function score as the final scheduling object from all the execution entity sets.

In an implementation, the updating the number of execution entities scheduled from the final scheduling object each scheduling time according to the decision result of each execution entity in the final scheduling object within the mimicry defense framework, includes:

determining an output proportion of each type of decision result, based on the decision result of each execution entity in the final scheduling object within the mimicry defense framework;
selecting an output proportion with a highest ranking as a target output proportion by sorting output proportions of all types of decision results in a descending order; and
updating the number of execution entities scheduled from the final scheduling object each time by using the target output proportion.

In an implementation, a formula for the calculating the heterogeneity degree of each execution entity set, includes:

$$\sigma^* = \frac{1}{2m} \times \sum_{i=1}^{m} \sum_{j=1}^{m} \sigma(E_i, E_j)$$

in the formula, $i \in [1,m]$, $j \in [1,m]$, m is a total number of execution entities in an execution entity set; $E_i$ is an i-th execution entity, $E_j$ is a j-th execution entity, $\sigma(E_i, E_j)$ is a heterogeneity degree between the i-th execution entity and the j-th execution entity, and $\sigma^*$ is the heterogeneity degree of the execution entity set.

In an implementation, a formula for the calculating the security defense coefficient of each execution entity in each execution entity set, includes:

$$\mu_i = \begin{cases} \mu_i' \times \vartheta, & an \text{ output of the execution entity being normal} \\ \mu_i' \div \vartheta, & \text{the output of the execution entity being abnormal} \end{cases}$$

in the formula, $i \in [1,m]$, m is a total number of execution entities in an execution entity set; $\mu_i$ is a current security defense coefficient of an i-th execution entity in the execution entity set; $\mu_i'$ is a previous security defense coefficient of the i-th execution entity in the execution entity set; and $\vartheta$ is an update factor.

In an implementation, a formula for the calculating the security defense coefficient of each execution set, includes:

$$\mu^* = \frac{1}{m} \times \sum_{i=1}^{m} \mu_i$$

in the formula, $i \in [1,m]$, m is a total number of execution entities in an execution entity set; $\mu_i$ is a current security defense coefficient of an i-th execution entity in the execution entity set; and $\mu^*$ is a security defense coefficient of the execution entity set.

In an implementation, a formula for the calculating the scheduling function score of each execution set, includes:

$$\theta(E_p) = \sigma * + \mu *$$

in the formula, $\theta(E_p)$ is a scheduling function score of an execution entity set, $\sigma*$ is a heterogeneity degree of the execution entity set, and $\mu*$ is a security defense coefficient of the execution entity set.

In an implementation, a formula for the calculating the number of execution entities scheduled from the final scheduling object each scheduling time, includes:

$$m(t) = [1 + \alpha(U_{t-2}^1 - U_{t-1}^1)] \times m(t-1)$$

in the formula, $t \in [1, T]$, T is a total number of scheduling times; $m(t)$ is a number of execution entities scheduled from the final scheduling object in a t-th scheduling time, $\alpha$ is a constant, $U_{t-2}^1$ is a target output proportion in a (t-2)-th scheduling time, $U_{t-1}^1$ is a target output proportion in a (t-1)-th scheduling time, and $m(t-1)$ is a number of execution entities scheduled from a final scheduling object in the (t-1)-th scheduling time.

According to a second aspect of the embodiments of the present disclosure, an execution entity scheduling optimization apparatus for a mimicry defense framework is provided, and the apparatus includes:

a constructing unit configured to construct a plurality of execution entity sets using a plurality of execution entities corresponding to a source program under test;
a calculating unit configured to calculate a heterogeneity degree of each execution entity set and a security defense coefficient of each execution entity set;
a determining unit configured to calculate a scheduling function score of each execution entity set, and determine a final scheduling object according to the scheduling function score of each execution entity set using the heterogeneity degree of each execution set and the security defense coefficient of each execution set; and
an updating unit configured to update a number of execution entities scheduled from the final scheduling object each scheduling time according to a decision result of each execution entity in the final scheduling object within the mimicry defense framework.

According to a third aspect of the present disclosure, an electronic device is provided, the electronic device includes: at least one processor and a memory; the memory and the processor are connected through a bus;

the memory is configured to store one or more programs;
when the one or more programs are executed by the at least one processor, the execution entity scheduling optimization method for the mimicry defense framework is implemented.

According to a fourth aspect of the embodiments of the present disclosure, a readable storage medium is provided, on which an executable program is stored, when the executable program is executed, the execution entity scheduling optimization method for the mimicry defense framework is implemented.

The technical solutions provided by the present disclosure may bring at least the beneficial effects as follows: the present disclosure provides the execution entity scheduling optimization method for the mimicry defense framework. The method constructs the plurality of execution entity sets by using the plurality of execution entities corresponding to the source program under test. The heterogeneity degree of each execution entity set and the security defense coefficient of each execution entity set are calculated. The scheduling function score of each execution entity set is calculated, and the final scheduling object according to the scheduling function score of each execution entity set is determined by using the heterogeneity degree of each execution set and the security defense coefficient of each execution set. Two evaluation indicators, namely heterogeneity and historical security are introduced to analyze heterogeneous entities, thereby enhancing a credibility of the execution entity security. The number of execution entities scheduled from the final scheduling object is updated according to the decision results of each execution entity in the final scheduling object within the mimicry defense framework, dynamic evaluation and scheduling are performed to ensure the differences between execution entities, thereby guaranteeing overall system security. Meanwhile, by combining historical data and dynamically determining the required number of execution entities based on temporal variation, the internal structure of the system is further dynamically changed, increasing the capability to resist unknown attacks. As a result, scheduling efficiency is optimized while guaranteeing the maximization of difference between execution entities, and the security and performance of the system are improved.

## BRIEF DESCRIPTION OF THE DRAWINGS

In order to describe technical solutions in embodiments of the present disclosure or in the prior art more clearly, the accompanying drawings to be used in the description of embodiments or in the prior art will be introduced briefly. However, the accompanying drawings to be described below are merely some embodiments of the present disclosure, and a person of ordinary skill in the art may obtain other drawings according to these drawings without paying creative efforts.

FIG. 1 is a structural schematic diagram of a mimicry defense framework provided in an embodiment of the present disclosure;

FIG. 2 is a flowchart of an execution entity scheduling optimization method for a mimicry defense framework provided in an embodiment of the present disclosure;

FIG. 3 is a structural block diagram of an execution entity scheduling optimization apparatus for a mimicry defense framework provided in an embodiment of the present disclosure; and

FIG. 4 is a structural diagram of an electronic device provided by an embodiment of the present disclosure.

## DETAILED DESCRIPTION

In order to make the purpose, technical solutions and advantages of the present disclosure clear, the technical solutions in some embodiments of the present disclosure will be described clearly and completely with reference to the accompanying drawings. However, the described embodiments are merely some but not all of embodiments of the present disclosure. Based on the embodiments in the present disclosure, all other embodiments obtained by those ordinary skilled in the art without creative efforts shall fall within the protection scope of the present disclosure.

**Embodiment 1 of the present disclosure**

The present disclosure provides an execution entity scheduling optimization method for a mimicry defense framework, as shown in FIG. 2, the method includes the following steps 101 to 104.

In step 101: construct a plurality of execution entity sets using a plurality of execution entities corresponding to a source program under test.

In step 102: calculate a heterogeneity degree of each execution entity set and a security defense coefficient of each execution entity set.

In step 103: calculate a scheduling function score of each execution entity set, and determine a final scheduling object according to the scheduling function score of each execution entity set using the heterogeneity degree of each execution set and the security defense coefficient of each execution set.

In step 104: update a number of execution entities scheduled from the final scheduling object each scheduling time according to a decision result of each execution entity in the final scheduling object within the mimicry defense framework.

In an implementation, the step 101 includes steps 1011 to 1012.

In step 1011: construct an execution entity pool using the plurality of execution entities corresponding to the source program under test.

In step 1012: construct the plurality of execution entity sets by selecting a plurality of groups of a preset number of execution entities from the execution entity pool.

The present disclosure improves existing scheduling algorithms by designing a differentiated feedback scheduling algorithm, which mainly includes two aspects: a scheduling object and a number of scheduling.

The scheduling object is a heterogeneous execution entity in a mimicry control layer. The scheduler selects several execution entities from the execution entity pool to perform tasks. The execution entities are independent and equal to each other. Task scheduling involves dynamically selecting execution entities to perform the task, and a number of execution entities n is great than or equal to 3 (i.e., $n \geq 3$). Mathematical symbols in the scheduling model are explained in Table 1.

Table 1. Meaning of Mathematical Symbols for Scheduling Strategies

| Mathematical symbols | Meaning |
| --- | --- |
| $E_p$ | All of the execution entity sets in the execution entity pool |
| $E_m$ | Execution entity set selected to execute |
| $E_i$ | The i-th execution entity |

(continued)

| Status | Execution entity status |
|---|---|
| 6 | Heterogeneity degree of the execution entity |
| 6* | Heterogeneity degree of execution entity sets |
| μ | Security defense coefficient |
| θ() | Scheduling object function |
| U | Execution entity output result classification set |
| M() | Functional heterogeneity degree matrix |

Assuming that there are a total of n execution entities $E_p=\{E_1E_2,E_3,\cdots,E_i,\cdots,E_n,\}$ in the execution entity pool, $E_i$ represents a single execution entity. The scheduler selects m execution entities to form an execution entity set, and k execution entities are not selected, where n equals to m plus k (i.e., n = m + k).

Each execution entity has three states, which are represented by status: status=1 indicates that the execution entity is selected; status=0 indicates that the execution entity is not selected but may be selected later; status=2 indicates that the security defense coefficient of the execution entity is too low and the execution entity will not be selected later.

In mimicry defense, the greater the structural differences between the selected execution entity objects, the more complex the internal structure of the system becomes, thereby reducing the likelihood of common-mode vulnerabilities in the execution entity objects, increasing the difficulty for attackers to succeed, and achieving intrinsic security of the system itself. In order to quantify the differences in the structure of the execution entity, the present disclosure obtains the heterogeneity degree σ between the execution entities by using a code similarity measurement method.

A core idea of the code similarity measurement method is to obtain the similarity by combining an overall structure of the code with a statement similarity.

Heterogeneity degree includes many aspects, such as programming languages, operating system platforms in operation, and hardware architectures. Heterogeneity degree is a quantitative parameter used to describe the degree of heterogeneity. The smaller the value, the greater the structural difference, and $\sigma \in (0,1]$. The code heterogeneity degree matrix obtained through code similarity measurement is shown below:

$$M\{E_1,E_2,E_3,E_4\}=1.\begin{bmatrix} 1.0 & \sigma(E_1,E_2) & \sigma(E_1,E_3) & \sigma(E_1,E_4) \\ \sigma(E_1,E_2) & 1.0 & \sigma(E_2,E_3) & \sigma(E_2,E_4) \\ \sigma(E_1,E_3) & \sigma(E_2,E_3) & 1.0 & \sigma(E_3,E_4) \\ \sigma(E_1,E_4) & \sigma(E_2,E_4) & \sigma(E_3,E_4) & 1.0 \end{bmatrix} \qquad (1);$$

It is conducive to increasing the difficulty for attackers by selecting an execution entity with high heterogeneity degree. During the scheduling process, heterogeneity degree is set as the basis for scheduling the execution entity.

In an implementation, in the step 102, the calculate the heterogeneity degree of each execution entity set, includes steps 1021 to 1022.

In step 1021: obtain a heterogeneity degree among each execution entity in each execution entity set by using a code similarity measurement method.

In step 1022: calculate the heterogeneity degree of each execution entity set by using the heterogeneity degree among each execution entity in each execution entity set.

A formula for calculating the heterogeneity degree of each execution set includes the following:

$$\sigma^* = \frac{1}{2m} \times \sum_{i=1}^{m} \sum_{j=1}^{m} \sigma(E_i,E_j) \qquad (2);$$

in the formula, $i \in [1,m]$, $j \in [1,m]$, m is a total number of execution entities in the execution entity set; $E_i$ is an i-th execution entity, $E_j$ is a j-th execution entity, $\sigma(E_i,E_j)$ is a heterogeneity degree between the i-th execution entity and the j-th execution entity, and $\sigma^*$ is the heterogeneity degree of the execution entity set.

It should be noted that the method of "using code similarity measurement method to obtain the heterogeneity degree between execution entities in each execution entity set" involved in the embodiments of the present disclosure is well known to those skilled in the art, therefore, the implementation method will not be described in detail.

Differences in the design structure of the execution entity itself will result in different defense capabilities. For the scheduler, it should select the execution entity with strong security defense capabilities as much as possible, and should not select the execution entity randomly. The present disclosure defines the security defense coefficient of the execution entity according to the abnormal conditions output by the execution entity. During initialization, the security defense coefficient of each execution entity is equal to each other. The decision device provides feedback on whether the execution entity is outputting abnormally. According to the output of each execution entity, the security defense coefficient is updated, with a smaller value indicating greater security. In an implementation, in step 102, the calculate the security defense coefficient for each execution set, includes steps 1023 to 1024.

In step 1023: determine a security defense coefficient of each execution entity in each execution entity set according to an output status of each execution entity in each execution entity set.

A formula for calculating the security defense coefficient of each execution entity in the execution entity set, includes the following:

$$\mu_i = \begin{cases} \mu_i' \times \vartheta, & an \text{ output of the execution entity being normal} \\ \mu_i' \div \vartheta, & \text{the output of the execution entity being abnormal} \end{cases} \quad (3);$$

in the formula, $i \in [1, m]$, m is a total number of execution entities in the execution entity set; $\mu_i$ is a current security defense coefficient of an i-th execution entity in the execution entity set; $\mu_i'$ is a previous security defense coefficient of the i-th execution entity in the execution entity set; and $\vartheta$ is an update factor.

In step 1024: calculate the security defense coefficient of each execution entity set by using the security defense coefficient of each execution entity in each execution entity set.

A formula for calculating the security defense coefficient of each execution set, includes the following:

$$\mu^* = \frac{1}{m} \times \sum_{i=1}^{m} \mu_i \quad (4);$$

in the formula, $i \in [1, m]$, m is the total number of execution entities in the execution entity set; $\mu_i$ is the current security defense coefficient of the i-th execution entity in the execution entity set; and $\mu^*$ is the security defense coefficient of the execution entity set.

It can be understood that the smaller the value of μ, the higher the security, and μ. $\mu^* \in (0,1]$, the scheduler will select the execution entity set with a small $\mu^*$ value.

According to the above analysis, and considering the impact of heterogeneity degree and the security defense coefficient of the execution entities on security defense, in an implementation, a formula for calculating the scheduling function score of each execution entity set, includes the following:

$$\theta(E_p) = \sigma^* + \mu^* \quad (5);$$

in the formula, $\theta(E_p)$ is a scheduling function score of the execution entity set, $\sigma^*$ is a heterogeneity degree of the execution entity set, and $\mu^*$ is a security defense coefficient of the execution entity set.

In an implementation, in the step 103, the determine the final scheduling object according to the scheduling function score of each execution entity set, includes the following:
select an execution entity set corresponding to a smallest scheduling function score as the final scheduling object from all the execution entity sets.

It can be understood that the smaller the vale of $\sigma^*$ and $\mu^*$, the better the defense performance. The scheduling algorithm finds the minimum value of the scheduling function, and the scheduler selects the corresponding execution entity. The calculation formula is as follows:

$$\theta(E_p) = \arg\min \sigma^* + \mu^* \quad (6);$$

the execution entity set $E_m = \{E_1, E_2, E_3, \cdots, E_i, \cdots, E_m,\}$ is obtained as the final scheduling object.

Mimicry defense adopts a majority-correct algorithm to judge the output of each execution entity and takes the result with the most identical outputs as the final output. Attackers need to attack the execution entity control system. The more execution entities there are, the more execution entities the attacker needs to attack to change the output proportion and affect the judgment result. Therefore, the number of scheduling execution entities directly affects the decision result and ultimately the security of the system. The more execution entities there are for scheduling, the safer it is undoubtedly, but the cost is also greater. Taking all factors into consideration, a reasonable number of schedulers is obtained. The present disclosure updates the number of execution entities scheduled each time according to the proportion of the decision results output by adopting a scheduling number algorithm based on decision feedback.

In an implementation, the step 104 includes steps 1041 to 1043.

In step 1041: determine an output proportion of each type of decision result, based on the decision result of each execution entity in the final scheduling object within the mimicry defense framework.

In step 1042: select an output proportion with a highest ranking as a target output proportion by sorting output proportions of all types of decision results in a descending order.

In step 1043: update the number of execution entities scheduled from the final scheduling object each scheduling time by using the target output proportion.

A formula for calculating the number of execution entities scheduled from the final scheduling object each scheduling time, includes the following:

$$m(t) = [1 + \alpha(U_{t-2}^1 - U_{t-1}^1)] \times m(t-1) \quad (7)$$

in the formula, $t \in [1, T]$, T is a total number of scheduling times; $m(t)$ is a number of execution entities scheduled from the final scheduling object in a t-th scheduling time, $\alpha$ is a constant, $U_{t-2}^1$ is a target output proportion in a (t-2)-th scheduling time, $U_{t-1}^1$ is a target output proportion in a (t-1)-th scheduling time, and $m(t-1)$ is a number of execution entities scheduled from a final scheduling object in the (t-1)-th scheduling time.

According to a feedback module, the proportion of each type of output may be obtained by grouping the same outputs into one category. After sorting, the percentage of each type of result is obtained. U is a result proportion set, which is: $U = \{U^1, U^2, U^3, \cdots, U^L\}$, where $U^1$ is the largest proportion, $U^2$ is the second largest proportion, $U^3$ is the third largest proportion, and $U^L$ is the L-th largest proportion (i.e., the last largest proportion). The output of the execution entity corresponding to $U^1$ is the final output of the decision device.

$U^1$ reflects the consistency of output results of each execution entity: $U^1$ close to 100% indicates that the output of each execution entity is very consistent and the system security status is relatively good; when $U^1$ decreases, it indicates that the output of each execution entity is relatively inconsistent, the system is unstable internally, some execution entities may have been attacked, changing the correct output results, and the system security status is poor.

It is conducive to improving system security by adding more execution entities, as a result, attackers need to attack more execution entities to change the output proportion, which increases the difficulty for attackers. By balancing system costs and security, the number of schedulers is reduced in a case where the output is similar to the previous one, and increased otherwise. Therefore, the number of schedulers is updated according to a rate of change before and after $U^1$, and when $m(t)$ is calculated, $m(t)$ may be rounded to the nearest whole number. The scheduler dynamically updates the number of execution entities scheduled according to the changes in the proportion of output from the execution entities before and after, enabling further dynamic transformation of the internal structure of the system and increasing the inherent security of the system.

To further illustrate the above-described execution entity scheduling optimization method for the mimicry defense framework, an embodiment of the present disclosure provides an example, which includes the following steps 1 to 3.

In step 1: the source program under test is transformed into a representation sequence and a metric list based on its structural features, such as conditional statements and function blocks. The bubble sort algorithm is used to compare the structural features of each module in the representation sequence, and the distance function is used to compare the structural features of every two programs to match the functional blocks with the same function between heterogeneous entities. The longest common subsequence algorithm is used to measure the obtained feature representation strings of the paired function blocks, and then the final measurement analysis result $\sigma(E_i, E_j)$ is obtained.

In step 2: based on the heterogeneity degree $\sigma(E_i, E_j)$ among the execution entities obtained in the step 1, construct a heterogeneity degree matrix for all valid execution entities (i.e., all heterogeneous execution entities with status $\neq 2$) according to the actual number of execution entities required. At the beginning of the process, all statuses are set to zero. Considering the requirement of three execution entities as an example: construct the heterogeneity matrices $M\{E_i, E_j, E_k\}$ of all possible execution entities.

Calculate the heterogeneity degree $\sigma^*$ of the execution entity set for all possible heterogeneity matrices M. For the initialized system, the three heterogeneous entities with the lowest heterogeneity degree in matrix M are selected and activated as the execution entities. When performing an update operation on an already running system, the execution entity defense coefficient needs to be introduced as a reference coefficient to increase system security. The update method is as follows in step 3.

In step 3: for all the initial heterogeneous entities, initialize their security defense coefficient μ to the same value. Use the decision device to feedback whether the execution entity is outputting abnormally. Update the security defense coefficient of the execution entity according to its output each time. The smaller the value, the safer it is. After each anomaly occurs, the security defense coefficient μ of the execution entity is updated through the formula (3), and the security defense coefficient μ* of the execution entity set may be obtained through the formula (4).

Based on the formula (5), considering the impact of the heterogeneity degree and the security defense coefficient of the execution entity on the overall system security comprehensively, the scheduling object function score $\theta(E_p)$ of the alternative heterogeneous entity set p may be obtained through calculation. Then, for all alternative heterogeneous entity sets, $\text{argmin}(\theta(E_p))$ is the final scheduling object.

Based on the dynamic scheduling of execution entities for security, the present disclosure uses feedback historical data to record the historical results of each heterogeneous entity, and obtains the execution entity output result classification set U based on the historical results. Considering the possible changes in the overall security of the system over time, the number of execution entities in operation is dynamically changed according to the formula (7) to maintain the stability of system security.

In a case where the feedback device detects an inconsistency in the output, the system should repeat the above steps starting from the step 2 and execute the dynamic scheduling strategy.

The present disclosure provides the execution entity scheduling optimization method for the mimicry defense framework. The method constructs the plurality of execution entity sets by using the plurality of execution entities corresponding to the source program under test. The heterogeneity degree of each execution entity set and the security defense coefficient of each execution entity set are calculated. The scheduling function score of each execution entity set is calculated, and the final scheduling object according to the scheduling function score of each execution entity set is determined by using the heterogeneity degree of each execution set and the security defense coefficient of each execution set. Two evaluation indicators, namely heterogeneity and historical security are introduced to analyze heterogeneous entities, thereby enhancing a credibility of the execution entity security. The number of execution entities scheduled from the final scheduling object is updated according to the decision results of each execution entity in the final scheduling object within the mimicry defense framework, dynamic evaluation and scheduling are performed to ensure the differences between execution entities, thereby guaranteeing overall system security. Meanwhile, by combining historical data and dynamically determining the required number of execution entities based on temporal variation, the internal structure of the system is further dynamically changed, increasing the capability to resist unknown attacks. As a result, scheduling efficiency is optimized while guaranteeing the maximization of difference between execution entities, and the security and performance of the system are improved.

**Embodiment 2 of the present disclosure**

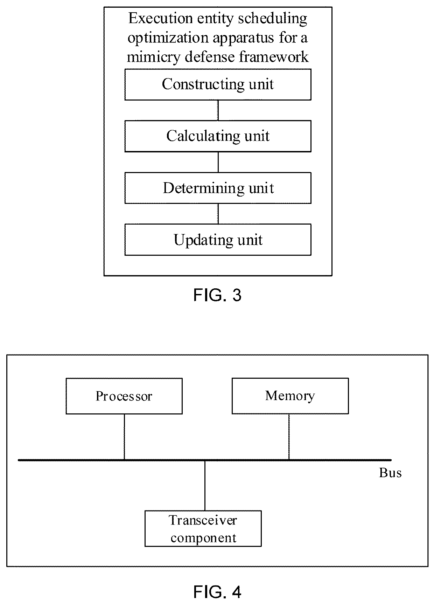

The present disclosure further provides an execution entity scheduling optimization apparatus for a mimicry defense framework, as shown in FIG. 3, the apparatus includes:

a constructing unit configured to construct a plurality of execution entity sets using a plurality of execution entities corresponding to a source program under test;
a calculating unit configured to calculate a heterogeneity degree of each execution entity set and a security defense coefficient of each execution entity set;
a determining unit configured to calculate a scheduling function score of each execution entity set, and determining a final scheduling object according to the scheduling function score of each execution entity set using the heterogeneity degree of each execution set and the security defense coefficient of each execution set; and
an updating unit configured to update a number of execution entities scheduled from the final scheduling object each scheduling time according to a decision result of each execution entity in the final scheduling object within the mimicry defense framework.

In an implementation, the constructing unit includes:

a first construction module configured to construct an execution entity pool using the plurality of execution entities corresponding to the source program under test; and
a second construction module configured to construct the plurality of execution entity sets by selecting a plurality of groups of a preset number of execution entities from the execution entity pool.

In an implementation, the calculating unit includes:

an acquisition module configured to obtain a heterogeneity degree among each execution entity in each execution entity set by using a code similarity measurement method; and
a first calculating module configured to calculate the heterogeneity degree of each execution entity set by using the heterogeneity degree among each execution entity in each execution entity set.

In an implementation, the formula for calculating the heterogeneity degree of each execution set, includes:

$$\sigma^* = \frac{1}{2m} \times \sum_{i=1}^{m} \sum_{j=1}^{m} \sigma(E_i, E_j)$$

in the formula, $i \in [1,m]$, $j \in [1,m]$, m is the total number of execution entities in the execution entity set; $E_i$ is the i-th execution entity, $E_j$ is the j-th execution entity, $\sigma(E_i,E_j)$ is the heterogeneity degree between the i-th execution entity and the j-th execution entity, and $\sigma^*$ is the heterogeneity degree of the execution entity set.
In an implementation, the calculating unit further includes:

a first determining module configured to determine a security defense coefficient of each execution entity in each execution entity set according to an output status of each execution entity in each execution entity set; and
a second calculating module configured to calculate the security defense coefficient of each execution entity set by using the security defense coefficient of each execution entity in each execution entity set.

In an implementation, the formula for calculating the security defense coefficient of each execution entity in each execution entity set, includes the following:

$$\mu_i = \begin{cases} \mu_i' \times \vartheta, & an \text{ output of the execution entity being normal} \\ \mu_i' \div \vartheta, & the \text{ output of the execution entity being abnormal} \end{cases}$$

in the formula, $i \in [1,m]$, m is the total number of execution entities in the execution entity set; $\mu_i$ is the current security defense coefficient of the i-th execution entity in the execution entity set; $\mu_i'$ is the previous security defense coefficient of the i-th execution entity in the execution entity set; and $\vartheta$ is the update factor.
In an implementation, the formula for calculating the security defense coefficient of each execution set, includes the following:

$$\mu^* = \frac{1}{m} \times \sum_{i=1}^{m} \mu_i$$

in the formula, $i \in [1,m]$, m is the total number of execution entities in the execution entity set; $\mu_i$ is the current security defense coefficient of the i-th execution entity in the execution entity set; and $\mu^*$ is the security defense coefficient of the execution entity set.
In an implementation, the formula for calculating the scheduling function score of each execution set, includes the following:

$$\theta(E_p) = \sigma^* + \mu^*$$

in the formula, $\theta(E_p)$ is the scheduling function score of the execution entity set, $\sigma^*$ is the heterogeneity degree of the execution entity set, and $\mu^*$ is the security defense coefficient of the execution entity set.
In an implementation, the determining unit is used for:
selecting an execution entity set corresponding to a smallest scheduling function score as the final scheduling object from all the execution entity sets.
In an implementation, the updating unit includes:

a second determination module configured to determine an output proportion of each type of decision result, based on the decision result of each execution entity in the final scheduling object within the mimicry defense framework;
a selecting module configured to select an output proportion with a highest ranking as a target output proportion by sorting output proportions of all types of decision results in a descending order; and
an updating module configured to update the number of execution entities scheduled from the final scheduling object each scheduling time by using the target output proportion.

In an implementation, the formula for calculating the number of execution entities scheduled from the final scheduling object each scheduling time, includes the following:

$$m(t) = [1 + \alpha(U_{t-2}^1 - U_{t-1}^1)] \times m(t-1)$$

in the formula, $t \in [1, T]$, T is the total number of scheduling times; $m(t)$ is the number of execution entities scheduled from the final scheduling object in the t-th scheduling time, $\alpha$ is the constant, $U_{t-2}^1$ is the target output proportion in the (t-2)-th scheduling time, $U_{t-1}^1$ is the target output proportion in the (t-1)-th scheduling time, and $m(t$-1) is the number of execution entities scheduled from the final scheduling object in the (t-1)-th scheduling time.

It can be understood that the apparatus embodiments provided above correspond to the method embodiments described above, and the details may be referred to each other, which will not be repeated herein.

It can be understood that the same or similar parts in the above embodiments may be referred to each other, and the contents not described in detail in some embodiments may be referred to the same or similar contents in other embodiments.

## Embodiment 3 of the present disclosure

As shown in FIG. 4, the present disclosure further provides an electronic device, the electronic device may be a computer device, a microcontroller device, or a smart mobile device. The electronic device in the present embodiment may include a processor, a memory, and a transceiver component. The memory, the processor, and the transceiver component are connected through a bus. The memory can be used to store executable programs, for example, the executable programs may include instructions; the processor is used to execute the instructions stored in the memory. The memory may also be used to store data that can be accessed and/or modified when instructions are executed.

The processor may be a central processing unit (CPU), or the processor may be other general-purpose processors, digital signal processors (DSPs), application-specific integrated circuits (ASICs), field-programmable gate arrays (FPGAs), or other programmable logic devices, discrete gate or transistor logic devices, discrete hardware components, and the like. The processor is the computing core and control core of the terminal, and is suitable for implementing one or more instructions. The processor is suitable for loading and executing one or more instructions in the storage medium to implement the corresponding method flow or corresponding function, so as to implement the steps of the execution entity scheduling optimization method for the mimicry defense framework in the above embodiments.

## Embodiment 4 of the present disclosure

Based on the same inventive concept, the present disclosure further provides a readable storage medium, such as an electronic device readable storage medium (Memory), the electronic device readable storage medium is a memory device in an electronic device configured to store programs and data. It can be understood that the storage medium herein may include both the built-in storage medium in electronic devices and the extended storage medium supported by electronic devices. The storage medium provides storage space, the storage space stores the operating system of the terminal. Furthermore, the storage space also contains one or more instructions suitable for being loaded and executed by the processor. These instructions may be one or more executable programs (including program code). It should be noted that the storage medium herein may be a high-speed random access memory (RAM) or a non-volatile memory, such as at least one disk storage device. The processor loads and executes one or more instructions stored in the storage medium to implement the steps of the execution entity scheduling optimization method for the mimicry defense framework in the above embodiments.

As will be understood for one skilled in the art, the embodiments of the present disclosure may be provided as a method, a system, or a computer program product. Therefore, the present disclosure may take a form of an entirely hardware embodiment, an entirely software embodiment, or an embodiment combining software and hardware. Moreover, the present disclosure may take a form of a computer program product embodied on one or more computer-readable storage media (including but not limited to disk storages, CD-ROMs, optical storages, etc.) having included computer-usable program codes therein.

The present disclosure is described with reference to flowcharts and/or block diagrams of methods, devices (systems) and the computer program product in accordance with embodiments of the present disclosure. It will be understood that each process and/or each block in the flowcharts and/or the block diagrams and combinations of processes and/or blocks in the flowcharts and/or the block diagrams may be implemented by the computer program instructions. These computer program instructions may be provided to processors of general-purpose computers, specialized computers, embedded processors, or other programmable data processing devices to generate a machine. In this way, a device used to realize functions defined by one or more process in the flowcharts and/or one or more blocks in the block diagrams is generated by using the processor of the computer or other programmable data processing device to execute instructions.

These computer program instructions may also be stored in a computer-readable memory capable of directing a computer or other programmable data processing device to function in a particular manner, such that the instructions stored in the computer-readable memory result in a manufacture including a command device. The instruction device implements the function defined by one or more process in the flowcharts and/or one or more blocks in the block diagrams.

These computer program instructions may also be loaded onto a computer or other programmable data processing device, enabling a series of operational steps to be performed on the computer or other programmable device to generate computer implemented processing. Thus instructions executed on a computer or other programmable device provide steps for implementing functions defined in one or more processes of the flowcharts and/or one or more blocks in the block diagram.

Finally, it should be noted that the above embodiments are only used to illustrate the technical solutions of the present disclosure and not to limit the present disclosure. Although the present disclosure has been described in detail with reference to the above embodiments, those ordinary person skilled in the art should understand that modifications or equivalent substitutions may still be made to the specific implementation of the present disclosure. Any modifications or equivalent substitutions that do not depart from the spirit and scope of the present disclosure should be covered within the protection scope of the claims of the present disclosure.

**Claims**

1. An execution entity scheduling optimization method for a mimicry defense framework, **characterized by** comprising:

   constructing a plurality of execution entity sets using a plurality of execution entities corresponding to a source program under test;
   calculating a heterogeneity degree of each execution entity set and a security defense coefficient of each execution entity set;
   calculating a scheduling function score of each execution entity set, and determining a final scheduling object according to the scheduling function score of each execution entity set using the heterogeneity degree of each execution set and the security defense coefficient of each execution set; and
   updating a number of execution entities scheduled from the final scheduling object each scheduling time according to a decision result of each execution entity in the final scheduling object within the mimicry defense framework.

2. The method according to claim 1, wherein the constructing the plurality of execution entity sets using the plurality of execution entities corresponding to the source program under test, comprises:

   constructing an execution entity pool using the plurality of execution entities corresponding to the source program under test; and
   constructing the plurality of execution entity sets by selecting a plurality of groups of a preset number of execution entities from the execution entity pool.

3. The method according to claim 1, wherein the calculating the heterogeneity degree of each execution entity set, comprises:

   obtaining a heterogeneity degree among each execution entity in each execution entity set by using a code similarity measurement method; and
   calculating the heterogeneity degree of each execution entity set by using the heterogeneity degree among each execution entity in each execution entity set.

4. The method according to claim 1, wherein the calculating the security defense coefficient of each execution entity set, comprises:

   determining a security defense coefficient of each execution entity in each execution entity set according to an output status of each execution entity in each execution entity set; and
calculating the security defense coefficient of each execution entity set by using the security defense coefficient of each execution entity in each execution entity set.

5. The method according to claim 1, wherein the determining the final scheduling object according to the scheduling function score of each execution entity set, comprises:
selecting an execution entity set corresponding to a smallest scheduling function score as the final scheduling object from all the execution entity sets.

6. The method according to claim 1, wherein the updating the number of execution entities scheduled from the final scheduling object each scheduling time according to the decision result of each execution entity in the final scheduling object within the mimicry defense framework, comprises:

determining an output proportion of each type of decision result, based on the decision result of each execution entity in the final scheduling object within the mimicry defense framework;
selecting an output proportion with a highest ranking as a target output proportion by sorting output proportions of all types of decision results in a descending order; and
updating the number of execution entities scheduled from the final scheduling object each scheduling time by using the target output proportion.

7. The method according to claim 1 or 3, wherein a formula for the calculating the heterogeneity degree of each execution entity set, comprises:

$$\sigma^* = \frac{1}{2m} \times \sum_{i=1}^{m} \sum_{j=1}^{m} \sigma(E_i, E_j)$$

in the formula, $i \in [1,m]$, $j \in [1,m]$, m is a total number of execution entities in an execution entity set; $E_i$ is an i-th execution entity, $E_j$ is a j-th execution entity, $\sigma(E_i,E_j)$ is a heterogeneity degree between the i-th execution entity and the j-th execution entity, and $\sigma^*$ is the heterogeneity degree of the execution entity set.

8. The method according to claim 4, wherein a formula for the calculating the security defense coefficient of each execution entity in each execution entity set, comprises:

$$\mu_i = \begin{cases} \mu_i' \times \vartheta, & an \text{ output of the execution entity being normal} \\ \mu_i' \div \vartheta, & \text{the output of the execution entity being abnormal} \end{cases}$$

in the formula, $i \in [1,m]$, m is a total number of execution entities in an execution entity set; $\mu_i$ is a current security defense coefficient of an i-th execution entity in the execution entity set; $\mu_i'$ is a previous security defense coefficient of the i-th execution entity in the execution entity set; and $\vartheta$ is an update factor.

9. The method according to claim 1 or 4, wherein a formula for the calculating the security defense coefficient of each execution set, comprises:

$$\mu^* = \frac{1}{m} \times \sum_{i=1}^{m} \mu_i$$

in the formula, $i \in [1,m]$, m is a total number of execution entities in an execution entity set; $\mu_i$ is a current security defense coefficient of an i-th execution entity in the execution entity set; and $\mu^*$ is a security defense coefficient of the execution entity set.

10. The method according to claim 1, wherein a formula for the calculating the scheduling function score of each execution entity set, comprises:

14

$$\theta(E_p) = \sigma* + \mu*$$

in the formula, $\theta(E_p)$ is a scheduling function score of an execution entity set, $\sigma*$ is a heterogeneity degree of the execution entity set, and $\mu*$ is a security defense coefficient of the execution entity set.

11. The method according to claim 6, wherein a formula for the calculating the number of execution entities scheduled from the final scheduling object each scheduling time, comprises:

$$m(t) = [1 + \alpha(U_{t-2}^1 - U_{t-1}^1)] \times m(t-1)$$

in the formula, $t \in [1, T]$, T is a total number of scheduling times; $m(t)$ is a number of execution entities scheduled from the final scheduling object in a t-th scheduling time, $\alpha$ is a constant, $U_{t-2}^1$ is a target output proportion in a (t-2)-th scheduling time, $U_{t-1}^1$ is a target output proportion in a (t-1)-th scheduling time, and $m(t-1)$ is a number of execution entities scheduled from a final scheduling object in the (t-1)-th scheduling time.

12. An execution entity scheduling optimization apparatus for a mimicry defense framework, **characterized by** comprising:

a constructing unit configured to construct a plurality of execution entity sets using a plurality of execution entities corresponding to a source program under test;
a calculating unit configured to calculate a heterogeneity degree of each execution entity set and a security defense coefficient of each execution entity set;
a determining unit configured to calculate a scheduling function score of each execution entity set, and determine a final scheduling object according to the scheduling function score of each execution entity set using the heterogeneity degree of each execution set and the security defense coefficient of each execution set; and
an updating unit configured to update a number of execution entities scheduled from the final scheduling object each scheduling time according to a decision result of each execution entity in the final scheduling object within the mimicry defense framework.

13. An electronic device, **characterized by** comprising: at least one processor and a memory; the memory and the processor are connected through a bus;

the memory is configured to store one or more programs;
the one or more programs, when executed by the at least one processor, cause the at least one processor to implement the execution entity scheduling optimization method for the mimicry defense framework according to any one of claims 1 to 11.

14. A computer readable storage medium, **characterized by** the computer readable storage medium is stored with program codes, when the program codes are executed, the execution entity scheduling optimization method for the mimicry defense framework according to any one of claims 1 to 11 is implemented.

FIG. 1

FIG. 2

EP 4 738 767 A1

Execution entity scheduling
optimization apparatus for a
mimicry defense framework

| Constructing unit |
| --- |

| Calculating unit |
| --- |

| Determining unit |
| --- |

| Updating unit |
| --- |

**FIG. 3**

| Processor | | Memory |
| --- | --- | --- |

Bus

| Transceiver
component |
| --- |

**FIG. 4**

17

## INTERNATIONAL SEARCH REPORT

| | International application No. |
|---|---|
| | **PCT/CN2024/113615** |

**A. CLASSIFICATION OF SUBJECT MATTER**

H04L9/40(2022.01)i

According to International Patent Classification (IPC) or to both national classification and IPC

**B. FIELDS SEARCHED**

Minimum documentation searched (classification system followed by classification symbols)

IPC:H04L G06F

Documentation searched other than minimum documentation to the extent that such documents are included in the fields searched

Electronic data base consulted during the international search (name of data base and, where practicable, search terms used)

CNABS, CNTXT, CNKI, DWPI, EPTXT, USTXT, VEN, WOTXT: 安全防御系数, 调度, 拟态防御, 异构度, 执行体, 执行体集, assurannce, coefficient, factor, isomerism, safety, security, mimic defense, schedul+

**C. DOCUMENTS CONSIDERED TO BE RELEVANT**

| Category* | Citation of document, with indication, where appropriate, of the relevant passages | Relevant to claim No. |
|---|---|---|
| X | 高明 等 (GAO, Ming et al.). "一种基于拟态防御的差异化反馈调度判决算法 (A Differential Feedback Scheduling Decision Algorithm Based on Mimic Defense)" 电信科学 (Telecommunications Science), 20 May 2020 (2020-05-20), pages 75-78 | 1-14 |
| X | 陈荔 (CHEN, Li). "一种用于路径配置的SDN拟态防御架构 (An SDN Pseudo Defense Architecture for Path Configuration)" 微型电脑应用 (Microcomputer Applications), 20 January 2022 (2022-01-20), pages 203-204 | 1-14 |
| A | CN 110855692 A (BEIJING WANGPIN CONSULTING CO., LTD.) 28 February 2020 (2020-02-28) entire document | 1-14 |
| A | CN 116155584 A (EAST CHINA COMPUTER TECHNOLOGY RESEARCH INSTITUTE (THE 32ND RESEARCH INSTITUTE OF CHINA ELECTRONICS TECHNOLOGY GROUP CORPORATION)) 23 May 2023 (2023-05-23) entire document | 1-14 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2024** | **13 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/113615**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021248740 A1 (PURPLE MOUNTAIN LABORATORIES) 16 December 2021 (2021-12-16)<br>entire document | 1-14 |

Form PCT/ISA/210 (second sheet) (July 2022)

**INTERNATIONAL SEARCH REPORT**
**Information on patent family members**

International application No.

**PCT/CN2024/113615**

| Patent document cited in search report | | | Publication date (day/month/year) | Patent family member(s) | Publication date (day/month/year) |
|---|---|---|---|---|---|
| CN | 110855692 | A | 28 February 2020 | None | |
| CN | 116155584 | A | 23 May 2023 | None | |
| WO | 2021248740 | A1 | 16 December 2021 | None | |

Form PCT/ISA/210 (patent family annex) (July 2022)

**REFERENCES CITED IN THE DESCRIPTION**

**Patent documents cited in the description**

- CN 202410670630